# EUROPEAN PATENT SPECIFICATION

(11) **EP 3 689 725 B1**
(45) Date of publication and mention of the grant of the patent: **29.09.2021**
(21) Application number: 18863545.2
(22) Date of filing: 08.08.2018
(51) Int. Cl.: B62J 15/00, B62J 1/12, B62J 9/14, B62J 43/30, B62K 11/04

(54) **SADDLE-TYPE VEHICLE**
SATTELFAHRZEUG
VÉHICULE DU TYPE À SELLE

(30) Priority: 29.09.2017 JP 2017191407
(43) Date of publication of application: 05.08.2020
(73) Proprietor: Honda Motor Co., Ltd., Tokyo 107-8556 (JP)
(72) Inventor: SHINDE, Yasuo, Wako-shi Saitama 351-0193 (JP); HIRAI, Kazuhito, Wako-shi Saitama 351-0193 (JP); NAKAMURA, Masanori, Wako-shi Saitama 351-0193 (JP); AYDOUNG, Tawatchai, Bangkok 10520 (TH); PHONGMEE, Nawa, Bangkok 10520 (TH); MOUNGTHAI, Issara, Bangkok 10520 (TH)
(74) Representative: Dehns
(86) International application number: PCT/JP2018/029796
(87) International publication number: WO 2019/064951

(56) References cited:
- JP-A- 2006 240 460
- JP-A- 2014 080 057
- JP-A- 2016 155 476
- JP-A- 2017 013 731
- US-A1- 2011 232 987

## Description

### [Technical Field]

The present invention relates to a saddle-type vehicle.

### [Background Art]

Up to now, a vehicle in which a battery and an ABS modulator are arranged below a seat has been known as a saddle-type vehicle (for example, see Patent Literature 1). Document JP2016155476A1 shows the preamble of claim 1.

### [Citation List]

### [Patent Literature]

[Patent Literature 1] International Publication No. WO 2011/025043

### [Summary of Invention]

### [Technical Problem]

According to Patent Literature 1, since a battery and an ABS modulator are arranged in a narrow space below a seat, it is desired that the battery and the ABS modulator are more compactly arranged.

An object of the present invention is to provide a saddle-type vehicle in which the battery and the ABS modulator can be more compactly arranged below the seat.

### [Solution to Problem]

To solve the above-described problem, according to the present invention, a saddle-type vehicle includes a seat (13) supported by a seat frame (18), a swing arm (12) that suspends a rear wheel (3), and a rear fender (46) that covers an upper side of the rear wheel (3), in which a battery (91) and an ABS modulator (92) are arranged below the seat (13), the saddle-type vehicle being characterized in that the rear fender (46) includes left and right side walls (55c) and a bottom wall (55g) that connects at least the left and right side walls (55c) to each other, and also includes a box portion (55) including an upper part opening (55A) and having a box-like shape, the battery (91) and the ABS modulator (92) are accommodated in the box portion (55), and the upper part opening (55A) of the box portion (55) is closed by the seat (13).

According to the above-described invention, the ABS modulator (92) may be arranged in front of the battery (91), an ECU (98) may be arranged below the battery (91), and an IMU (93) is arranged below the ABS modulator (92) .

In addition, according to the above-described invention, a battery case (96) that accommodates the battery (91) is included, the battery case (96) may be positioned to the box portion (55), and the battery (91) may be fixed to the box portion (55) via a holding member (101) .

In addition, according to the above-described invention, a stepped portion (55k) may be included in an upper part of the box portion (55), and the ABS modulator (92) may be supported to the stepped portion (55k) via a bracket (106).

In addition, according to the above-described invention, the box portion (55) includes a front wall (55b) connected to the left and right side walls (55c) and the bottom wall (55g), a slit (55j) is disposed in the front wall (55b), the IMU (93) is supported to a frame member (18a) via a support member (71), and the support member (71) extends through the slit (55j).

### [Advantageous Effects of Invention]

Since a rear fender of the present invention includes left and right side walls and a bottom wall that connects at least the left and right side walls to each other and also includes a box portion including an upper part opening and having a box-like shape, a battery and an ABS modulator are accommodated in the box portion, and the upper part opening of the box portion is closed by a seat, an accommodation portion is formed in a part of a structure of the rear fender, the battery and the ABS modulator can be arranged in a space partitioned from the outside in a concentrated manner, and the battery and the ABS modulator can be compactly arranged in a space below the seat.

According to the above-described invention, since the ABS modulator is arranged in front of the battery, an ECU is arranged below the battery, and an IMU is arranged below the ABS modulator, the battery and the ABS modulator are arranged to be offset forward and rearward, and therefore maintenance be individually performed. In addition, when the ECU and the IMU are arranged as other electric components in the box portion as well as the battery and the ABS modulator, the arrangement can be performed in a more concentrated manner.

In addition, according to the above-described invention, since a battery case that accommodates the battery is included, the battery case is positioned to the box portion, and the battery is fixed to the box portion via a holding member, the battery can be removed by removing the holding member, and maintenance of the ECU arranged underneath can be performed.

In addition, according to the above-described invention, since a stepped portion is included in an upper part of the box portion, and the ABS modulator is supported to the stepped portion via a bracket, maintenance of the ABS modulator can be performed by removing the bracket from the stepped portion.

In addition, according to the above-described invention, the box portion includes a front wall connected to the left and right side walls and the bottom wall, a strength of the box portion is likely to be secured when the front wall is disposed, a slit is disposed in the front wall, and the IMU is supported to a frame member via a support member, and since the support member extends through the slit, the support member can be installed in a closed space in the box portion through the slit.

### [Brief Description of Drawings]

[Figure 1]Figure 1 is a left side view illustrating a motorcycle according to an embodiment of the present invention.
[Figure 2]Figure 2 is a left side view illustrating a vehicle body frame.
[Figure 3]Figure 3 is a left side view illustrating the vehicle body frame and a rear fender.
[Figure 4]Figure 4 is a plan view illustrating a lower side of a seat and its surrounding.
[Figure 5]Figure 5 is a left side view illustrating the rear fender.
[Figure 6]Figure 6 is a bottom view illustrating the rear fender and its surrounding.
[Figure 7]Figure 7 is a perspective view illustrating a front box portion and an accommodated object in the front box portion.
[Figure 8]Figure 8 is a front view illustrating the front box portion.
[Figure 9]Figure 9 is a plan view illustrating the front box portion and its accommodated object.
[Figure 10]Figure 10 is a bottom view illustrating the front box portion.
[Figure 11]Figure 11 is a cross sectional view along a line XI-XI in Figure 9.
[Figure 12]Figure 12 is a cross sectional view along a line XII-XII in Figure 9.

### [Description of Embodiments]

Hereinafter, an embodiment of the present invention will be described with reference to the drawings. It is noted that in the explanation, descriptions on directions such as front, rear, left, and right, and up and down are set to be the same as directions with respect to a vehicle body unless particularly described. In addition, a reference sign FR illustrated in the respective drawings denotes a front side of the vehicle body, a reference sign UP denotes an upper side of the vehicle body, and a reference sign LH denotes a left hand side of the vehicle body.

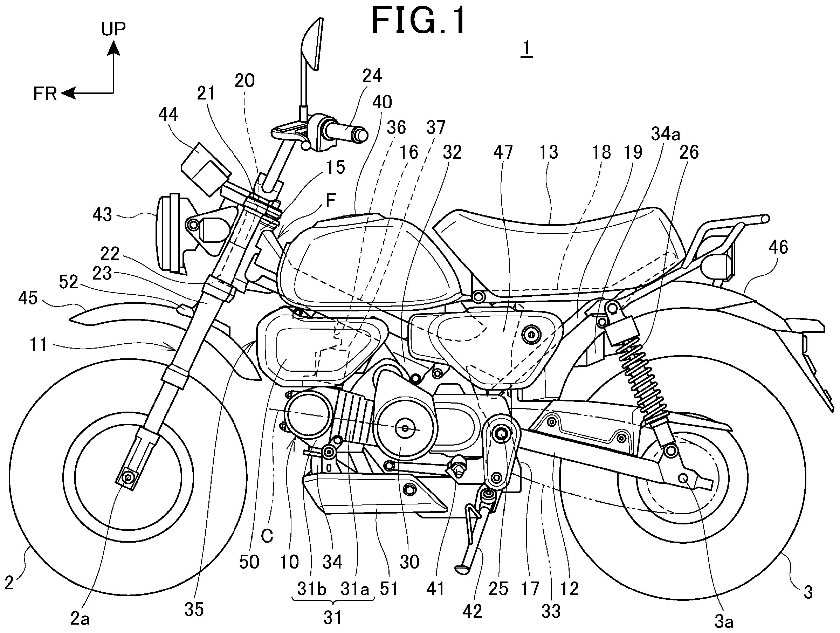

Figure 1 is a left side view illustrating a motorcycle 1 according to the embodiment of the present invention. It is noted that in Figure 1, with regard to a pair of components disposed on the left and right, only the left component is illustrated in the drawing including the reference sign.

The motorcycle 1 is a vehicle in which an engine 10 serving as a power unit is supported to a vehicle body frame F, a steering system 11 that supports a front wheel 2 so as to be steerable is supported to a front end of the vehicle body frame F so as to be steerable, and a swing arm 12 that supports a rear wheel 3 is disposed on a rear part side of the vehicle body frame F. The motorcycle 1 is a saddle-type vehicle in which a seat 13 on which a rider sits like striding is disposed above a rear part of the vehicle body frame F.

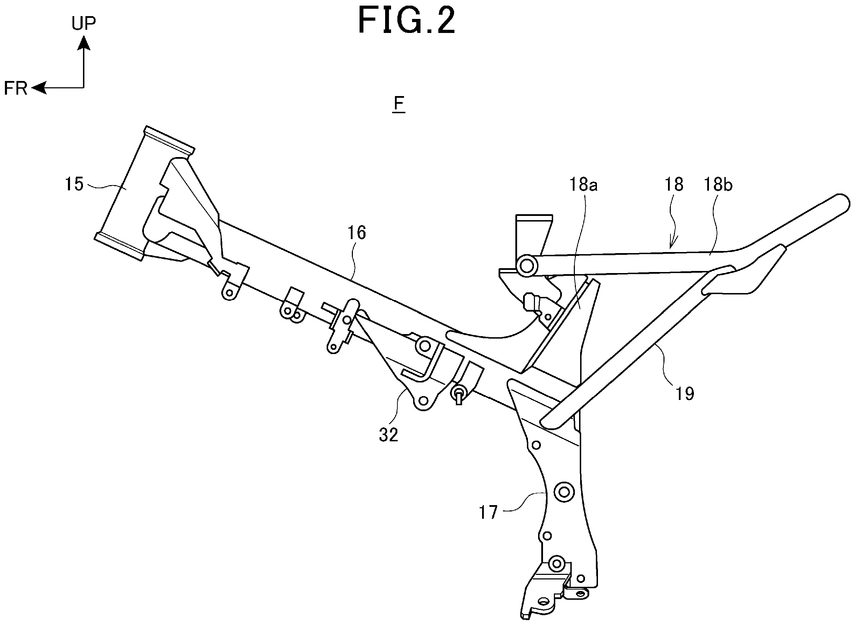

Figure 2 is a left side view illustrating the vehicle body frame F.

The vehicle body frame F includes a head pipe 15, a main frame 16, a pivot frame 17, a seat frame 18, and a pair of left and right sub frames 19.

The head pipe 15 is disposed in the front end of the vehicle body frame F. The main frame 16 rearwardly extends alone from a rear surface of the head pipe 15 in a rearward descending manner. The pivot frame 17 downwardly extends from a rear end part of the main frame 16.

The seat frame 18 includes an upward extending portion 18a that upwardly extends from the rear end part of the main frame 16, and a rearward extending portion 18b that rearwardly extends from the upward extending portion 18a. The sub frames 19 respectively extend from left and right side surfaces of the pivot frame 17 upwardly and rearwardly to be connected to a rear part of the seat frame 18.

The steering system 11 includes a steering shaft 20 pivotally supported to the head pipe 15, a top bridge 21 fixed to an upper end of the steering shaft 20, and a bottom bridge 22 fixed to a lower end of the steering shaft 20, and a pair of front forks 23 arranged on the left and right of the head pipe 15 to be supported to the top bridge 21 and the bottom bridge 22.

The front wheel 2 is pivotally supported to the lower end parts of the front forks 23 via an axle 2a. A handle 24 used by the rider to steer the front wheel 2 is attached to the top bridge 21.

A front end part of the swing arm 12 is pivotally supported to a pivot shaft 25 that penetrates through the pivot frame 17 in a vehicle width direction, and swings up and down about the pivot shaft 25. The rear wheel 3 is pivotally supported to a rear end part of the swing arm 12 via an axle 3a.

A pair of left and right rear suspensions 26 are extended between the rear end part of the swing arm 12 and the rear part of the seat frame 18.

The engine 10 includes a crankcase 30 that supports a crankshaft that extends in the vehicle width direction, and a cylinder portion 31 that forwardly extends from the front part of the crankcase 30. The cylinder portion 31 includes a cylinder block 31a in which a piston is accommodated, and a cylinder head 31b in which a valve operating mechanism is disposed. In the engine 10, a cylinder axis C of the cylinder portion 31 substantially horizontally extends to the front and rear.

A gearbox (not illustrated) is built in the crankcase 30.

In the engine 10, an upper part of the crankcase 30 is fixed to an engine hanger 32 that downwardly extends from the main frame 16. In addition, the pivot frame 17 is fixed to a rear part of the crankcase 30.

An output of the engine 10 is transmitted to the rear wheel 3 by a chain 33 wound between an output shaft of the gearbox and the rear wheel 3.

An exhaust duct 34 of the engine 10 is downwardly drawn from an exhaust port on a lower surface of the cylinder head 31b to rearwardly extend and is connected to a muffler 34a.

An inlet device 35 of the engine 10 is arranged between the cylinder portion 31 and the main frame 16.

The inlet device 35 includes an air cleaner 36 (vehicle body functional part), a throttle body 37 (inlet system part) connected to an inlet port on an upper surface of the cylinder head 31b, and a connecting tube (not illustrated) that mutually connects the air cleaner 36 and the throttle body 37. A fuel supply device (not illustrated) that injects fuel to an inlet passage of the inlet device 35 is disposed in the throttle body 37.

A flow rate of air taken into the air cleaner 36 is adjusted by the throttle body 37 to be supplied to the engine 10.

A fuel tank 40 is arranged above the main frame 16 between the head pipe 15 and the seat frame 18 and supported to the main frame 16. The seat 13 is arranged behind the fuel tank 40 and supported to the rearward extending portion 18b of the seat frame 18 from the lower side.

Left and right steps 41 on which the rider puts feet are arranged in front of a lower end part of the pivot frame 17. A side stand 42 is attached to the lower end part of the pivot frame 17.

A headlight 43 is arranged in front of the head pipe 15. A meter unit 44 is arranged in front of the top bridge 21.

A front fender 45 that covers the front wheel 2 from the upper side is attached to the bottom bridge 22. A rear fender 46 that covers the rear wheel 3 from the upper side is attached to the rear part of the vehicle body frame F.

The motorcycle 1 includes a pair of left and right cover members 50 that cover the air cleaner 36, and an undercover 51 that covers the engine 10 from the lower side.

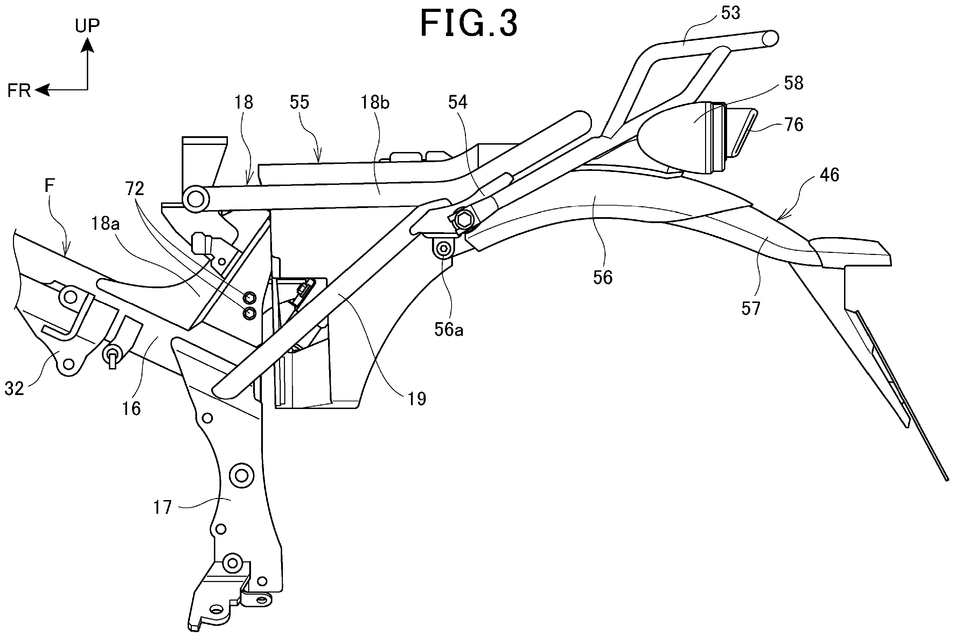

Figure 3 is a left side view illustrating the vehicle body frame F and the rear fender 46.

The suspension support plates 54 are attached to connecting parts between the seat frame 18 and the left and right sub frames 19, and upper ends of the rear suspensions 26 (see Figure 1) are attached to the left and right suspension support plates 54.

A rear carrier 53 is attached to the rear part of the seat frame 18 and the left and right suspension support plates 54.

The rear fender 46 is constituted by a front box portion 55 attached to the vehicle body frame F, an intermediate fender portion 56 attached to a rear part of the front box portion 55, and a rear fender portion 57 that is disposed in the intermediate fender portion 56 so as to rearwardly protrude from the intermediate fender portion 56.

The front box portion 55 is an accommodating box that accommodates various electric components and the like. A pair of left and right rear winkers 58 are disposed in an upper part of the intermediate fender portion 56.

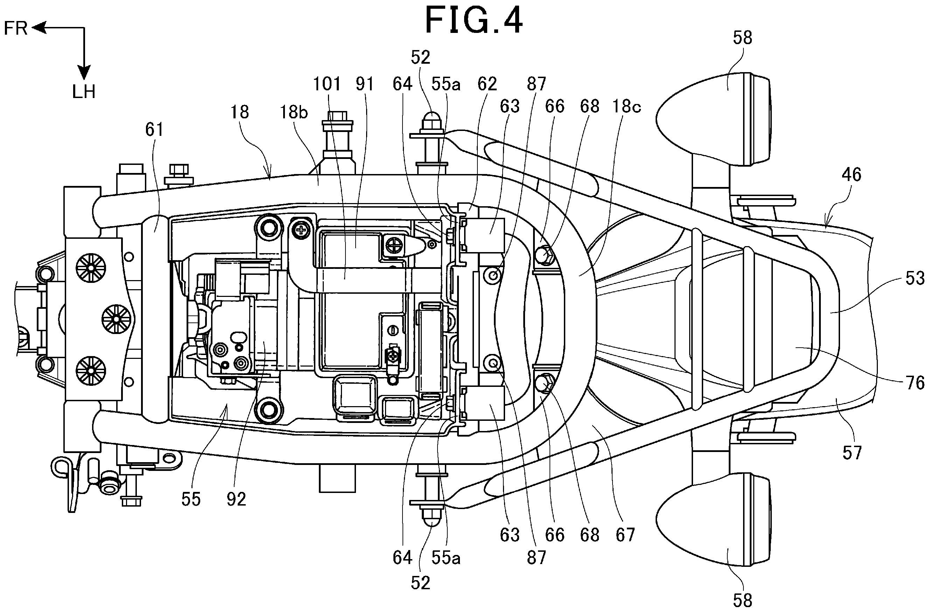

Figure 4 is a plan view illustrating a lower side of the seat 13 and its surrounding.

The seat frame 18 includes a pair of front and rear cross frames 61 and 62 extending in the vehicle width direction, and the front box portion 55 of the rear fender 46 is arranged so as to be surrounded by the rearward extending portion 18b of the seat frame 18 and the front and rear cross frames 61 and 62.

A pair of left and right frame attachment portions 55a that extend in the vehicle width direction are disposed in a rear end part of the front box portion 55, and the left and right frame attachment portions 55a are respectively fastened by bolts 64 to a pair of left and right attachment brackets 63 disposed in the cross frame 62 on the rear side.

A pair of left and right carrier support brackets 66 are disposed in a curved rear part 18c provided in the rearward extending portion 18b, and cross plates 67 that are provided in the rear carrier 53 so as to extend to the left and right are respectively fastened to the left and right carrier support brackets 66 by bolts 68. Left and right front end parts of the rear carrier 53 are fastened to the left and right suspension support plates 54 by bolts 52 together with the left and right rear suspensions 26.

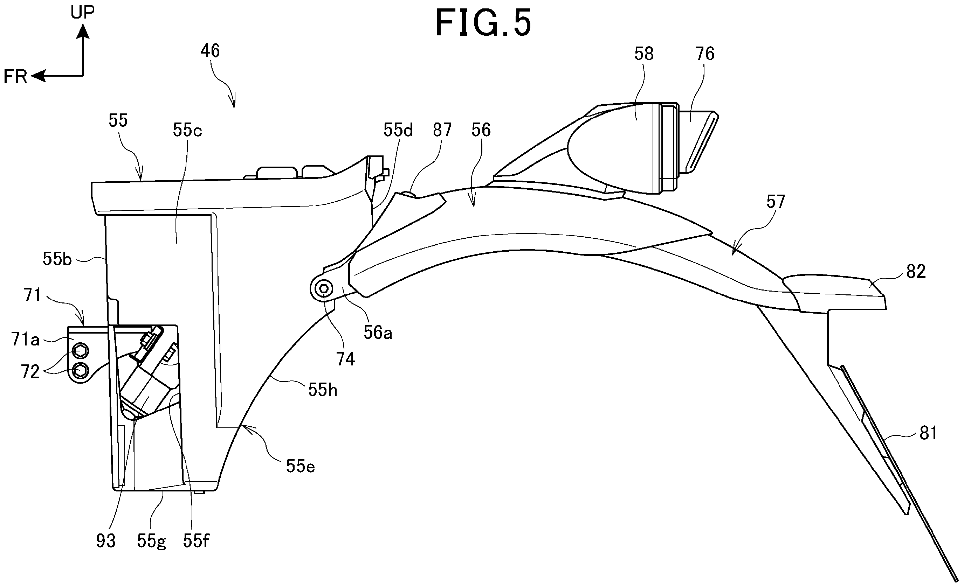

Figure 5 is a left side view illustrating the rear fender 46.

The front box portion 55 of the rear fender 46 is formed to have a box-like shape constituted by a front wall 55b, left and right side walls 55c, a rear wall 55e, and a bottom wall 55g.

In the front box portion 55, a frame side support piece 71 penetrates through the front wall 55b from the inside and forwardly protrudes. A front end part 71a of the frame side support piece 71 is fastened to the upward extending portion 18a (see Figure 3) of the vehicle body frame F (see Figure 3) by a pair of bolts 72.

An opening 55f is disposed in the side wall 55c on one side (left side), and a part of an accommodated object (specifically, the IMU 93 which will be described below in detail) is exposed from the opening 55f.

The rear wall 55e includes a vertical wall portion 55d disposed on the upper side, and a curved rear wall 55h that extends while being curved downwardly and diagonally forwardly from a lower edge of the vertical wall portion 55d. Both of respective side edges of the intermediate fender portion 56 and the rear fender portion 57 extend while being curved so as to elongate the curved rear wall 55h.

Forward protruding pieces 56a are disposed in the left and right of a front end part of the intermediate fender portion 56, and the left and right forward protruding piece 56a are fastened to the left and right suspension support plates 54 (see Figure 3) by bolts 74.

A tail light 76 is disposed in the upper part of the intermediate fender portion 56, and the pair of left and right rear winkers 58 are attached to both side parts of the tail light 76. A license plate 81 and a license light 82 located above the license plate 81 are attached to a rear part of the rear fender portion 57.

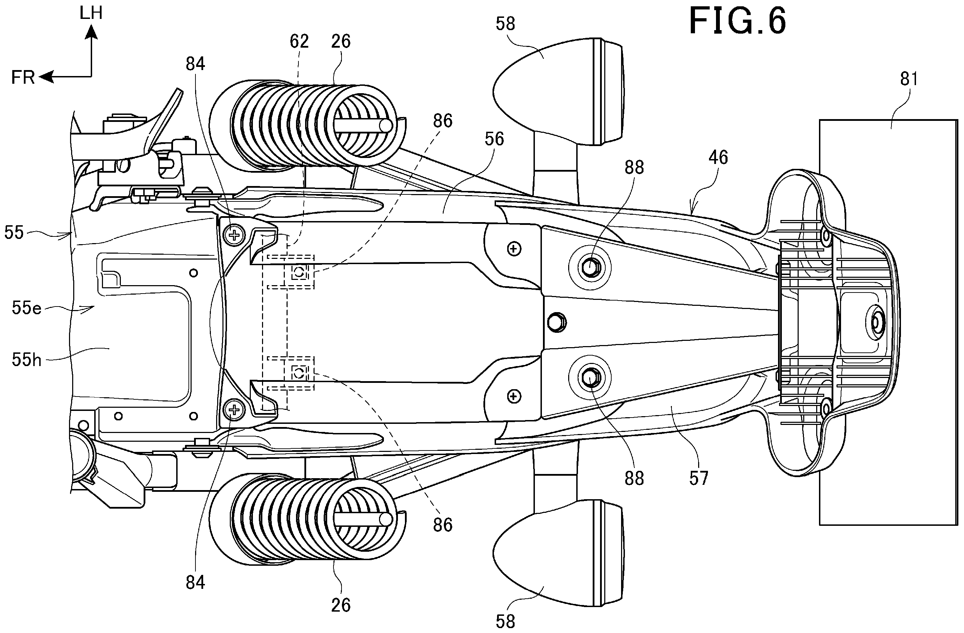

Figure 6 is a bottom view illustrating the rear fender 46 and its surrounding.

The front end part of the intermediate fender portion 56 is overlapped with a rear end part of the rear wall 55e of the front box portion 55 (specifically, the curved rear wall 55h), and also the intermediate fender portion 56 is fastened to the curved rear wall 55h by a pair of left and right vises 84.

In addition, the intermediate fender portion 56 is fastened to a pair of left and right fender brackets 86 disposed in a cross frame 62 on a side of the seat frame 18 by vises 87 (see Figure 5).

A front end part of the rear fender portion 57 is overlapped with a rear end part of the intermediate fender portion 56, and also the rear fender portion 57 is fastened to the intermediate fender portion 56 by a pair of left and right bolts 88.

In this manner, when the intermediate fender portion 56 is attached to the side of the seat frame 18, the rear fender 46 can be firmly supported.

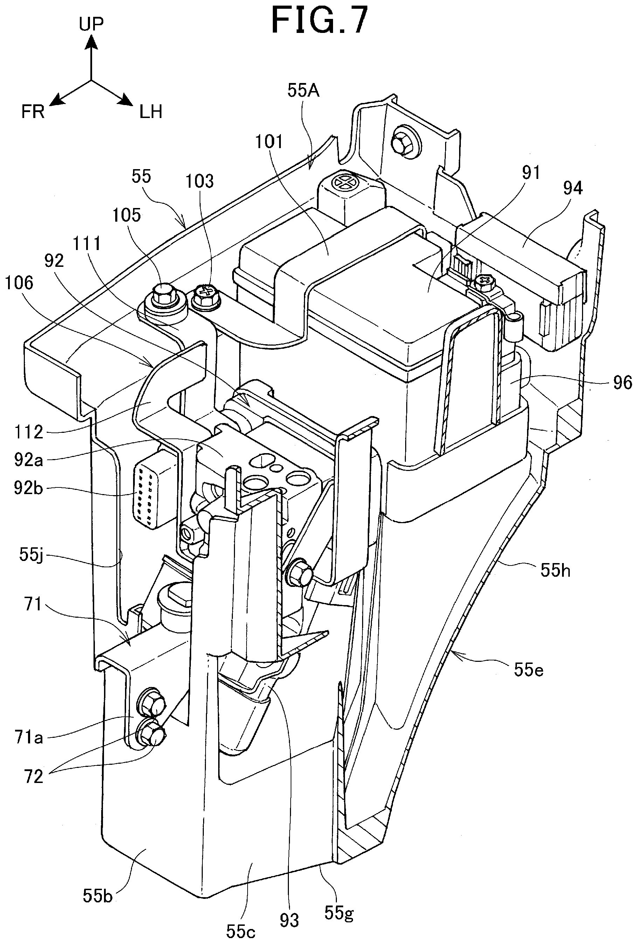

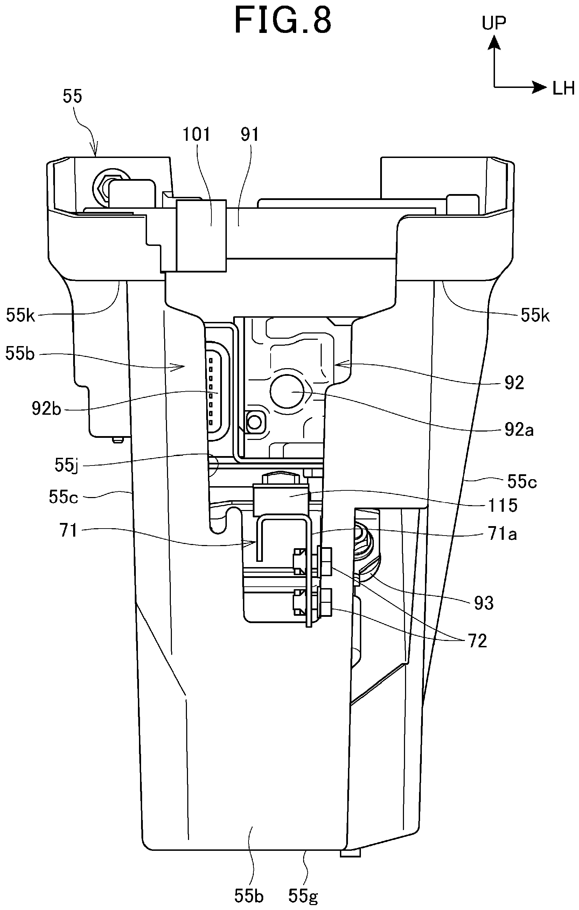

Figure 7 is a perspective view illustrating the front box portion 55 and an accommodated object in the front box portion 55. It is noted that drawing is carried out by partially cutting away the front box portion 55. Figure 8 is a front view illustrating the front box portion 55.

As illustrated in Figure 7, the front box portion 55 is formed to have a box-like shape in which an opening 55A is formed in an upper part, and a battery 91, an ABS modulator 92, an IMU (Inertial Measurement Unit) 93, and a fuse box 94 are accommodated in the front box portion 55.

The battery 91 is arranged in a battery case 96 and arranged in an upper rear part of the front box portion 55. The ABS modulator 92 constitutes a main part of the ABS together with a control device (not illustrated) and controls braking force of the front wheel 2 (see Figure 1) and the rear wheel 3 (see Figure 1).

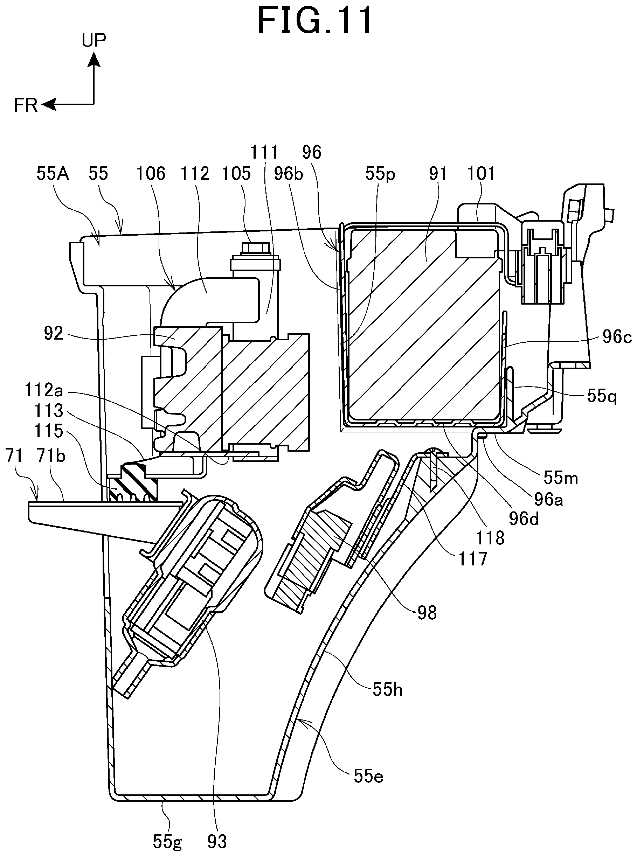

The IMU 93 is constituted by a plurality of sensor groups that detect an angular rate and an acceleration of the vehicle body, and control by an ECU (electronic control unit) 98 (see Figure 11) such as traction control, wheelie control, and brake control by the ABS is promptly and also highly accurately performed on the basis of the angular rate and the acceleration detected by the IMU 93.

As illustrated in Figure 7 and Figure 8, a slit 55j that downwardly extends from an upper edge is formed in the front wall 55b of the front box portion 55, and the frame side support piece 71 that supports the IMU 93 through the slit 55j forwardly protrudes from the inside of the front box portion 55. The front end part 71a of the frame side support piece 71 is fastened to the vehicle body frame F (see Figure 3), specifically, the upward extending portion 18a (see Figure 3) by the pair of bolts 72.

A width of the slit 55j in the vehicle width direction is gradually narrowed towards the lower side.

As illustrated in Figure 1, Figure 4, and Figure 7 above, the motorcycle 1 serving as the saddle-type vehicle includes the seat 13 supported by the seat frame 18, the swing arm 12 that suspends the rear wheel 3, and the rear fender 46 that covers the upper side of the rear wheel 3, and the battery 91 and the ABS modulator 92 are arranged below the seat 13.

The rear fender 46 includes the left and right side walls 55c and the bottom wall 55g that connects at least the left and right side walls 55c to each other, and also includes the front box portion 55 serving as a box portion including the opening 55A as an upper part opening and having a box-like shape. The battery 91 and the ABS modulator 92 are accommodated in the front box portion 55, and the opening 55A of the front box portion 55 is closed by the seat 13.

In accordance with this configuration, an accommodation portion (front box portion 55) can be formed in a part of a structure of the rear fender 46, and the battery 91 and the ABS modulator 92 can be arranged in a space partitioned from the outside in a concentrated manner. Accordingly, the battery 91 and the ABS modulator 92 can be compactly arranged in the space below the seat 13.

In addition, as illustrated in Figure 7 and Figure 8, the front box portion 55 includes the front wall 55b connected to the left and right side walls 55c and the bottom wall 55g. The slit 55j is disposed in the front wall 55b, the IMU 93 is supported to the upward extending portion 18a (see Figure 3) serving as a frame member via the frame side support piece 71 serving as a support member, and the frame side support piece 71 extends through the slit 55j.

In accordance with this configuration, a strength of the front box portion 55 is likely to be secured when the front wall 55b is disposed, and the frame side support piece 71 can be installed in a closed space in the front box portion 55 through the slit 55j.

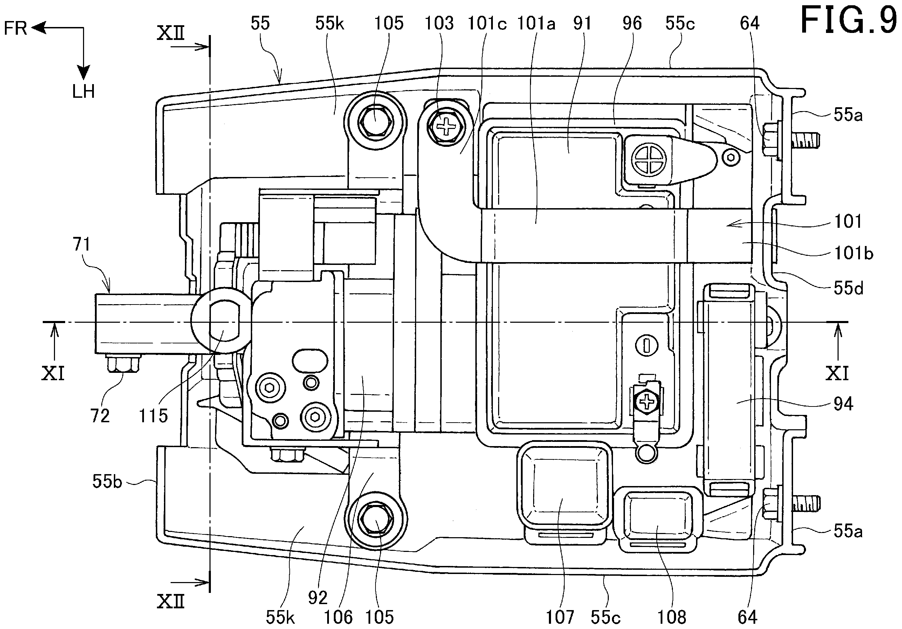

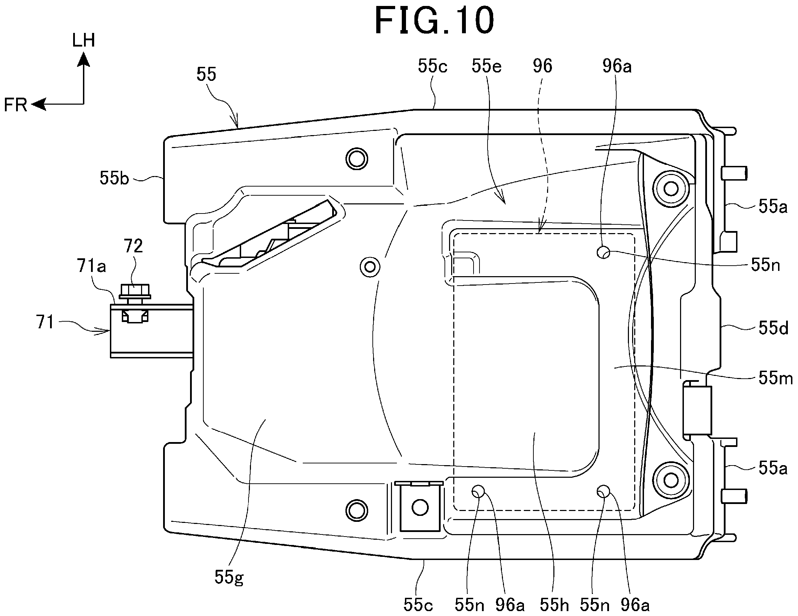

Figure 9 is a plan view illustrating the front box portion 55 and its accommodated object, and Figure 10 is a bottom view illustrating the front box portion 55.

As illustrated in Figure 9, the battery 91 is pressed by a strip-like holding member 101 from the upper side. The holding member 101 is constituted by a pressing portion 101a that forwardly and rearwardly extends and abuts against an upper part of the battery 91, a rear extending portion 101b that rearwardly extends from a rear end of the pressing portion 101a, and a forward bending portion 101c that is bent from a front end of the pressing portion 101a to the other side (right side) in the vehicle width direction. The rear end part of the rear extending portion 101b is engaged with the vertical wall portion 55d of the front box portion 55, and an end part of the forward bending portion 101c of the holding member 101 is fastened to one of a pair of left and right stepped portions 55k (stepped portion 55k on the right side) disposed in an upper part of the front box portion 55 by a bolt 103.

The ABS modulator 92 is arranged in front of the battery 91 and supported to the left and right stepped portions 55k of the front box portion 55 by modulator brackets 106 respectively attached by bolts 105.

The fuse box 94 is arranged between the battery 91 and the vertical wall portion 55d of the front box portion 55, and a starter relay 107 and a winker relay 108 are arranged between the battery 91 and the side wall 55c on the one side (left side) of the front box portion 55.

As illustrated in Figure 10, a flat portion 55m formed to be substantially horizontal is disposed in the rear wall 55e of the front box portion 55, specifically, the curved rear wall 55h, and a plurality of positioning holes 55n are opened in the flat portion 55m. A plurality of protrusions 96a formed in a bottom part of the battery case 96 are respectively inserted into the plurality of positioning holes 55n, and the battery case 96 is positioned to the front box portion 55.

As illustrated in Figure 9 and Figure 10 above, the motorcycle 1 (see Figure 1) includes the battery case 96 that accommodates the battery 91, and the battery case 96 is positioned to the front box portion 55. The battery 91 is fixed to the front box portion 55 via the holding member 101.

In accordance with this configuration, the battery 91 can be removed by removing the holding member 101, and maintenance of the ECU 98 arranged underneath can be performed.

Figure 11 is a cross sectional view along a line XI-XI in Figure 9.

The battery case 96 includes a front wall 96b, left and right side walls (not illustrated), a rear wall 96c, and a bottom wall 96d. The front wall 96b is in proximity to or abuts against a vertical wall 55p formed in the front box portion 55, the rear wall 96c is in proximity to or abuts against a raised wall 55q that is raised from a rear edge of the flat portion 55m, and the battery case 96 is arranged between the vertical wall 55p and the raised wall 55q arranged in the front and rear.

In addition, the bottom wall 96d is installed on the flat portion 55m of the front box portion 55, and the plurality of protrusions 96a formed in the bottom wall 96d are inserted into the positioning holes 55n of the front box portion 55 (see Figure 10).

The ABS modulator 92 has an upper surface arranged to be lower than an upper surface of the battery 91, and a lower surface arranged to be lower than a lower surface of the battery 91. The modulator bracket 106 is constituted by a plate-like rear part bracket 111 attached to the front box portion 55 by the pair of bolts 105, and a plate-like front part bracket 112 disposed such that an upper part forwardly protrudes from the rear part bracket 111.

A lower part bracket 113 is disposed on a lower surface 112a of the front part bracket 112, and a rubber piece 115 that abuts against an upper surface 71b of the frame side support piece 71 is attached to the lower part bracket 113.

The IMU 93 is attached in a forward descending manner to a rear end part of the frame side support piece 71.

The ECU 98 attached to the curved rear wall 55h of the front box portion 55 via an attachment bracket 117 is arranged behind the IMU 93 below the battery 91 and the ABS modulator 92. The ECU 98 is arranged in a forward descending manner along the curved rear wall 55h. The attachment bracket 117 is fastened to the curved rear wall 55h by a vis 118.

As illustrated above, the ABS modulator 92 is arranged in front of the battery 91, the ECU 98 is arranged below the battery 91, and the IMU 93 is arranged below the ABS modulator 92.

In accordance with this configuration, the battery 91 and the ABS modulator 92 are arranged to be offset forward and rearward, and therefore maintenance can be individually performed. In addition, when the ECU 98 and the IMU 93 are arranged in the front box portion 55 as other electric components as well as the battery 91 and the ABS modulator 92, the arrangement can be performed in a more concentrated manner.

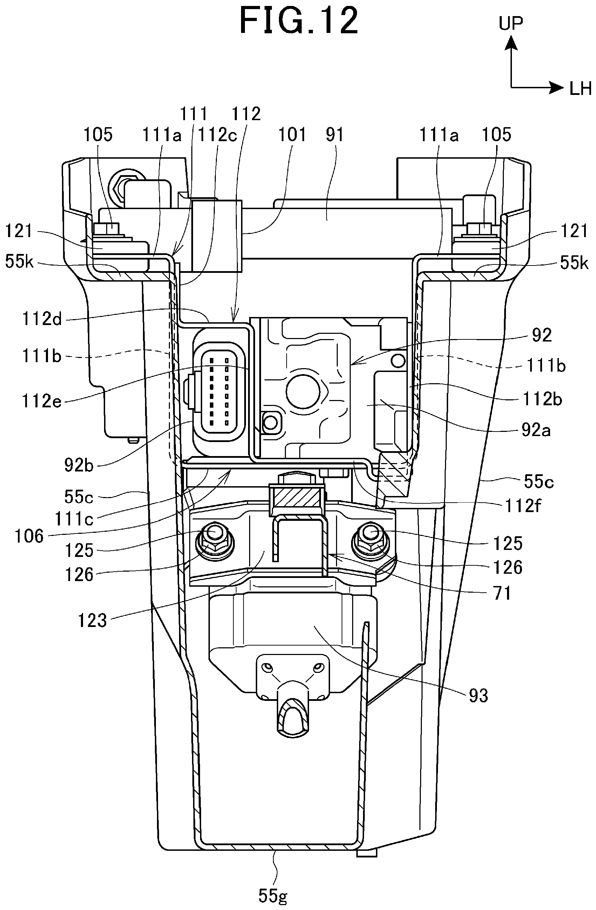

Figure 12 is a cross sectional view along a line XII-XII in Figure 9.

The ABS modulator 92 includes a modulator main body 92a and a connector portion 92b disposed on a side part of the modulator main body 92a and is elastically supported to the left and right stepped portions 55k of the front box portion 55 via the modulator brackets 106. Specifically, the modulator brackets 106 are attached to the left and right stepped portions 55k by the bolts 105 via elastic members 121 made of rubber or the like.

In this manner, since the ABS modulator 92 is elastically supported to the front box portion 55, it is possible to make vibration and impact of the vehicle body difficult to be transmitted to the ABS modulator 92.

In the rear part bracket 111 of the modulator bracket 106, a pair of left and right end part flat portions 111a, a pair of left and right rear vertically-elongated portions 111b, and a rear horizontally-elongated portion 111c are integrally formed.

The end part flat portions 111a are fastened to the stepped portions 55k by the bolts 105 via the elastic members 121. The rear vertically-elongated portions 111b downwardly extend from an inner edge of the end part flat portions 111a. The rear horizontally-elongated portion 111c mutually connects lower edges of the left and right rear vertically-elongated portions 111b.

In the front part bracket 112 of the modulator bracket 106, a one-side front vertically-elongated portion 112b, an other-side front vertically-elongated portion 112c, a front upper part horizontally-elongated portion 112d, a front inner-side vertically-elongated portion 112e, and a front lower horizontally-elongated portion 112f are integrally formed.

The one-side front vertically-elongated portion 112b is attached to an inner side surface of the rear vertically-elongated portions 111b on one side (left side). The other-side front vertically-elongated portion 112c is attached to the rear vertically-elongated portions 111b on the other side (right side). The front upper part horizontally-elongated portion 112d extends from a lower edge of the other-side front vertically-elongated portion 112c towards an inner side in the vehicle width direction. The front inner-side vertically-elongated portion 112e downwardly extends from a lower edge of the front upper part horizontally-elongated portion 112d. The front lower horizontally-elongated portion 112f connects respective lower edges of the front inner-side vertically-elongated portion 112e and the one-side front vertically-elongated portion 112b to each other.

A part of the front lower horizontally-elongated portion 112f is overlapped on the rear horizontally-elongated portion 111c, and the ABS modulator 92 is fixed on the front lower horizontally-elongated portion 112f.

The frame side support piece 71 includes an IMU support member 123 in the rear end part, and the IMU 93 is fastened to the IMU support member 123 by a pair of bolts 125 and a pair of nuts 126.

As illustrated above, the upper part of the front box portion 55 includes the stepped portions 55k, and the ABS modulator 92 is supported to the stepped portions 55k via the modulator bracket 106 serving as a bracket.

In accordance with this configuration, maintenance of the ABS modulator 92 can be performed by removing the modulator bracket 106 from the stepped portions 55k.

The present invention is not limited to the case applied to the motorcycle 1, but can also be applied to any saddle-type vehicle that is in accordance with claim 1.

### [Reference Signs List]

- 1: MOTORCYCLE (SADDLE-TYPE VEHICLE)
- 3: REAR WHEEL
- 12: SWING ARM
- 13: SEAT
- 18: SEAT FRAME
- 18a: UPWARD EXTENDING PORTION (FRAME MEMBER)
- 46: REAR FENDER
- 55A: OPENING (UPPER PART OPENING)
- 55b: FRONT WALL
- 55c: SIDE WALL
- 55g: BOTTOM WALL
- 55j: SLIT
- 55k: STEPPED PORTION
- 71: FRAME SIDE SUPPORT PIECE (SUPPORT MEMBER)
- 91: BATTERY
- 92: ABS MODULATOR
- 93: IMU
- 96: BATTERY CASE
- 98: ECU
- 101: HOLDING MEMBER
- 106: MODULATOR BRACKET (BRACKET)

## Claims

1. A saddle-type vehicle comprising: a seat (13) supported by a seat frame (18); a swing arm (12) that suspends a rear wheel (3); and a rear fender (46) that covers an upper side of the rear wheel (3), wherein a battery (91) and an ABS modulator (92) are arranged below the seat (13), the saddle-type vehicle **characterized in that**
the rear fender (46) includes left and right side walls (55c) and a bottom wall (55g) that connects at least the left and right side walls (55c) to each other, and also includes a box portion (55) including an upper part opening (55A) and having a box-like shape, the battery (91) and the ABS modulator (92) are accommodated in the box portion (55), and the upper part opening (55A) of the box portion (55) is closed by the seat (13), an Inertial Measurement Unit (93), IMU, is arranged below the ABS modulator (92), and
the box portion (55) includes a front wall (55b) connected to the left and right side walls (55c) and the bottom wall (55g), a slit (55j) is disposed in the front wall (55b), the IMU (93) is supported to a frame member (18a) via a support member (71), and the support member (71) extends through the slit (55j).

2. A saddle-type vehicle according to Claim 1, wherein the ABS modulator (92) is arranged in front of the battery (91), and an ECU (98) is arranged below the battery (91).

3. A saddle-type vehicle according to Claim 2, further comprising a battery case (96) that accommodates the battery (91), wherein the battery case (96) is positioned to the box portion (55), and the battery (91) is fixed to the box portion (55) via a holding member (101).

4. A saddle-type vehicle according to Claim 2 or 3, wherein a stepped portion (55k) is included in an upper part of the box portion (55), and the ABS modulator (92) is supported to the stepped portion (55k) via a bracket (106).

## Patentansprüche

1. Sattelfahrzeug, umfassend: einen Sitz (13), der durch einen Sitzrahmen (18) gestützt ist; eine Schwinge (12), die ein Hinterrad (3) aufhängt; und einen hinteren Kotflügel (46), der eine Oberseite des Hinterrads (3) abdeckt, wobei eine Batterie (91) und ein ABS-Modulator (92) unterhalb des Sitzes (13) angeordnet sind, wobei das Sattelfahrzeug **dadurch gekennzeichnet ist, dass**
der hintere Kotflügel (46) eine linke und eine rechte Seitenwand (55c) und eine untere Wand (55g), die mindestens die linke und die rechte Seitenwand (55c) miteinander verbindet, einschließt, und außerdem einen Kastenabschnitt (55) einschließt, der eine Oberteilöffnung (55A) einschließt und eine kastenartige Form aufweist, die Batterie (91) und der ABS-Modulator (92) in dem Kastenabschnitt (55) aufgenommen sind und die Oberteilöffnung (55A) des Kastenabschnitts (55) durch den Sitz (13) geschlossen ist,
eine inertiale Messeinheit (93), IMU, unterhalb des ABS-Modulators (92) angeordnet ist, und
der Kastenabschnitt (55) eine Vorderwand (55b), die mit der linken und der rechten Seitenwand (55c) und der unteren Wand (55g) verbunden ist, einschließt, ein Schlitz (55j) in der Vorderwand (55b) angeordnet ist, die IMU (93) über ein Trägerelement (71) an einem Rahmenelement (18a) gestützt ist und sich das Trägerelement (71) durch den Schlitz (55j) erstreckt.

2. Sattelfahrzeug nach Anspruch 1,
wobei der ABS-Modulator (92) vor der Batterie (91) angeordnet ist und eine ECU (98) unterhalb der Batterie (91) angeordnet ist.

3. Sattelfahrzeug nach Anspruch 2, weiter ein Batteriegehäuse (96) umfassend, das die Batterie (91) aufnimmt, wobei das Batteriegehäuse (96) an dem Kastenabschnitt (55) angeordnet ist und die Batterie (91) über ein Halteelement (101) an dem Kastenabschnitt (55) befestigt ist.

4. Sattelfahrzeug nach Anspruch 2 oder 3, wobei ein Stufenabschnitt (55k) in einem Oberteil des Kastenabschnitts (55) enthalten ist und der ABS-Modulator (92) über eine Halterung (106) an dem Stufenabschnitt (55k) gestützt ist.

## Revendications

1. Véhicule de type à selle comprenant : un siège (13) supporté par un châssis de siège (18) ; un bras oscillant (12) qui suspend une roue arrière (3) ; et un garde-boue arrière (46) qui recouvre un côté supérieur de la roue arrière (3), dans lequel une batterie (91) et un modulateur ABS (92) sont agencés sous le siège (13), le véhicule de type à selle étant **caractérisé en ce que**
le garde-boue arrière (46) inclut des parois latérales gauche et droite (55c) et une paroi inférieure (55g) qui relie au moins les parois latérales gauche et droite (55c) l'une à l'autre, et inclut également une partie boîte (55) incluant une ouverture de partie supérieure (55A) et présentant une forme analogue à une boîte, la batterie (91) et le modulateur ABS (92) sont logés dans la partie boîte (55), et l'ouverture de partie supérieure (55A) de la partie boîte (55) est fermée par le siège (13),
une unité de mesure d'inertie (93), IMU, est agencée sous le modulateur ABS (92), et
la partie boîte (55) inclut une paroi avant (55b) reliée aux parois latérales gauche et droite (55c) et à la paroi inférieure (55g), une entaille (55j) est située dans la paroi avant (55b), l'IMU (93) est supportée par un élément de châssis (18a) par l'intermédiaire d'un élément de support (71), et l'élément de support (71) s'étend à travers l'entaille (55j).

2. Véhicule de type à selle selon la revendication 1, dans lequel le modulateur ABS (92) est agencé devant la batterie (91), et une ECU (98) est agencée sous la batterie (91).

3. Véhicule de type à selle selon la revendication 2, comprenant en outre un boîtier de batterie (96) qui loge la batterie (91), dans lequel le boîtier de batterie (96) est positionné sur la partie boîte (55), et la batterie (91) est fixée sur la partie boîte (55) par l'intermédiaire d'un élément de maintien (101).

4. Véhicule de type à selle selon la revendication 2 ou 3, dans lequel une partie étagée (55k) est incluse dans une partie supérieure de la partie boîte (55), et le modulateur ABS (92) est supporté par la partie étagée (55k) par l'intermédiaire d'une patte de fixation (106).
